# EUROPEAN PATENT APPLICATION

(11) **EP 4 730 464 A1**
(43) Date of publication of application: **22.04.2026**
(21) Application number: 24908021.9
(22) Date of filing: 17.12.2024
(51) Int. Cl.: H01M 10/0567, H01M 10/0569, H01M 10/052, H01M 4/58, H01M 4/38

(54) **ELECTROLYTE FOR LITHIUM-SULFUR BATTERY AND LITHIUM-SULFUR BATTERY COMPRISING SAME**

(30) Priority: 22.12.2023 KR 20230190474
(71) Applicant: LG Energy Solution, Ltd., Seoul 07335 (KR)
(72) Inventor: JUNG, Jin-Kwan, Daejeon 34122 (KR); PARK, Seong-Hyo, Daejeon 34122 (KR); LEE, Chang-Hoon, Daejeon 34122 (KR)
(74) Representative: Goddar, Heinz J.
(86) International application number: PCT/KR2024/020517
(87) International publication number: WO 2025/135738

(57) **Abstract**

The present disclosure provides an electrolyte for a lithium-sulfur battery for repelling polysulfide from lithium ions, to prevent polysulfide-induced degradation of a negative electrode, and suppress the accumulation of lithium sulfide on the negative electrode surface, thereby achieving high capacity retention and improving life characteristics and a lithium-sulfur battery including the same.

The electrolyte for the lithium-sulfur battery according to an embodiment of the present disclosure includes a lithium salt, a non-aqueous solvent and an additive, wherein the additive includes a compound of the following Chemical Formula 1: 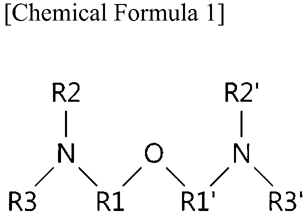 wherein R1 and R1' are each independently an alkylene group having 1 to 10 carbon atoms, and
wherein R2, R2', R3 and R3' are each independently alkyl group having 1 to 10 carbon atoms.

## Description

### TECHNICAL FIELD

The present disclosure relates to an electrolyte for a lithium-sulfur battery and a lithium-sulfur battery including the same.

This application is based on and claims priority from Korean Patent Application No. 10-2023-0190474, filed on December 22, 2023, with the Korean Intellectual Property Office, the disclosure of which is incorporated herein in its entirety by reference.

### BACKGROUND

A lithium-sulfur battery is a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material.

In the lithium-sulfur battery, sulfur, the main component of the positive electrode active material has low atomic weight, is abundant and readily available, and has low cost, low toxicity and eco-friendliness advantages.

In addition, in the lithium-sulfur battery, the theoretical specific capacity based on conversion reaction (S₈ +16Li⁺ +16e⁻ → 8Li₂S) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH battery: 450 Wh/kg, Li-FeS battery: 480 Wh/kg, Li-MnO₂ battery: 1,000 Wh/kg, Na-S battery: 800 Wh/kg) and lithium ion batteries (250 Wh/kg), lithium-sulfur batteries are gaining attention as a high-capacity, eco-friendly and low-cost lithium secondary battery among secondary batteries developed so far.

Inside the lithium-sulfur battery, during discharging, as sulfur gains electrons, a reduction reaction occurs at the positive electrode, and as lithium is ionized, an oxidation reaction occurs at the negative electrode. Specifically, during discharging, oxidation occurs in which the negative electrode active material, lithium, releases electrons into lithium cation, and reduction occurs in which the positive electrode active material, the sulfur-based material gains electrons. Here, through the reduction reaction of the sulfur-based material, the S-S bond gains two electrons and is converted to sulfur anion. The lithium cation produced by the oxidation reaction of lithium migrates to the positive electrode via the electrolyte, and bonds with the sulfur anion produced by the reduction reaction of the sulfur-based compound to form a salt. Specifically, sulfur before the discharge has a cyclic S₈ structure, and it is converted to lithium polysulfide (Li₂Sₓ) by the reduction reaction and is completely reduced to lithium sulfide (Li₂S).

In this instance, due to the accumulation of the produced lithium sulfide on the electrode surface of the lithium-sulfur battery, the discharge capacity of the lithium-sulfur battery does not yet reach the theoretical capacity, and some of lithium polysulfide (Li₂Sₓ, x = 2 to 8) produced at the positive electrode easily dissolve in the electrolyte, causing side reaction in the battery, which accelerates the degradation of the battery and reduces the life, and it causes shuttle reaction during charging, resulting in significantly low charge/discharge efficiency.

### DISCLOSURE

### Technical Problem

As a result of extensive research to solve the above-described problems, the inventors aim at preventing lithium sulfide- and/or polysulfide-induced degradation of a negative electrode by adding a predetermined compound as an additive of an electrolyte for a lithium-sulfur battery. The present disclosure is directed to providing an electrolyte for a lithium-sulfur battery for increasing capacity retention and improving life characteristics of the lithium-sulfur battery and a lithium-sulfur battery including the same.

### Technical Solution

To achieve the above-described objective, according to the present disclosure, there are provided an electrolyte for a lithium-sulfur battery and a lithium-sulfur battery of the following embodiments.

The electrolyte for the lithium-sulfur battery according to a first embodiment includes:
a lithium salt, a non-aqueous solvent and an additive,
wherein the additive includes a compound of the following Chemical Formula 1: 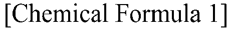 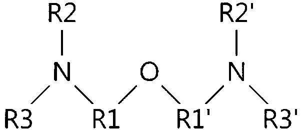
wherein R1 and R1' are each independently an alkylene group having 1 to 10 carbon atoms, and
wherein R2, R2', R3 and R3' are each independently an alkyl group having 1 to 10 carbon atoms.

According to a second embodiment, in the first embodiment,
R1 and R1' may be each independently an alkylene group having 1 to 3 carbon atoms, and
R2, R2', R3 and R3' may be each independently an alkyl group having 1 to 3 carbon atoms.

According to a third embodiment, in the first or second embodiment,
the compound of Chemical Formula 1 may include bis[2-(N,N-dimethylamino)ethyl] ether (BDMA).

According to a fourth embodiment, in any one of the first to third embodiments,
the additive may further include a nitric acid compound.

According to a fifth embodiment, in the fourth embodiment,
the nitric acid compound may include lithium nitrate (LiNO₃).

According to a sixth embodiment, in any one of the first to fifth embodiments,
the additive may be included in an amount of 1 wt% to 10 wt% based on total 100 wt% of the electrolyte.

According to a seventh embodiment, in any one of the first to sixth embodiments,
the compound of the Chemical Formula 1 may be included in an amount of 0.5 wt% to 5 wt% based on total 100 wt% of the electrolyte.

According to an eighth embodiment, in any one of the first to seventh embodiments,
the non-aqueous solvent may include an ether-based solvent.

According to a ninth embodiment, in the eighth embodiment,
the ether-based solvent may be included in an amount of 80 vol% or more based on a total volume of the non-aqueous solvent.

According to a tenth embodiment, in any one of the first to ninth embodiments,
the lithium salt may include LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylic acid, lithium tetraphenylborate, lithium imide or two or more of them.

The lithium-sulfur battery according to an eleventh embodiment includes:
a positive electrode; a negative electrode; a separator between the positive electrode and the negative electrode; and an electrolyte,
wherein the electrolyte may be defined in any one of the first to tenth embodiments.

According to a twelfth embodiment, in the eleventh embodiment,
the positive electrode may include a sulfur-containing compound as a positive electrode active material.

According to a thirteenth embodiment, in the eleventh or twelfth embodiment,
the negative electrode may include a lithium metal, a lithium alloy or a mixture thereof.

### Advantageous Effects

The present disclosure may add the predetermined compound that can strongly coordinate with lithium ions as the additive of the electrolyte for the lithium-sulfur battery, to repel polysulfide from the lithium ions, thereby preventing polysulfide-induced degradation of the negative electrode, and suppressing the accumulation of lithium sulfide on the negative electrode surface.

Accordingly, the electrolyte for the lithium-sulfur battery of the present disclosure and the lithium-sulfur battery including the same may achieve high capacity retention and improved life characteristics.

### BRIEF DESCRIPTION OF THE DRAWINGS

The accompanying drawings illustrate an exemplary embodiment of the present disclosure and together with the foregoing disclosure, serve to provide a better understanding of the technical aspects of the present disclosure, and thus, the present disclosure is not construed as being limited to the drawings.
FIG. 1 is a graph showing the measured discharge capacity of lithium-sulfur batteries according to Example 1 and Comparative Examples 1 to 3.
FIG. 2 is a graph showing the measured energy density of lithium-sulfur batteries according to Example 1 and Comparative Examples 1 to 3.

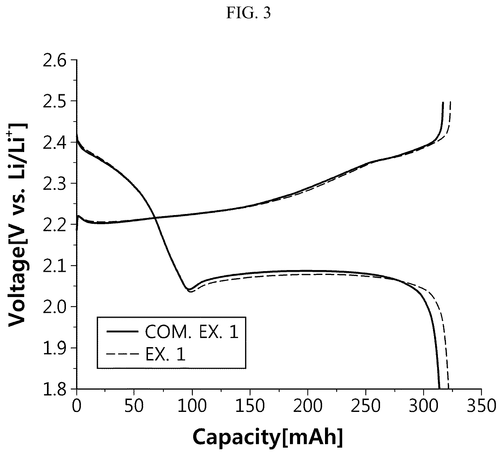

FIG. 3 is a graph showing discharge curves plotting the measured voltage vs capacity of lithium-sulfur batteries according to Example 1 and Comparative Example 1.

### BEST MODE

Hereinafter, the present disclosure will be described in more detail.

The terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

The terms as used herein are used to describe the exemplary embodiments and are not intended to be limiting of the present disclosure. The singular forms include the plural forms unless the context clearly indicates otherwise.

It should be understood that "comprising", "including" or "having" when used in this specification, specifies the presence of stated elements, but does not preclude the presence or addition of one or more other elements unless expressly stated otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, A and/or B as used herein refers to either A or B or both.

The term "composite" as used herein refers to a material in which two or more materials are combined to form physically or chemically different phases and which exhibits more effective functions.

The term "polysulfide" as used herein is the concept that covers "polysulfide ion (Sₓ²⁻, x = 8, 6, 4, 2)" and "lithium polysulfide (Li₂Sₓ or Li₂Sₓ⁻ = 8, 6, 4, 2)".

Lithium secondary batteries, in particular, lithium-sulfur batteries suffer from degradation of the negative electrode due to lithium sulfide and/or polysulfide by continuous reaction between the lithium negative electrode and the electrolyte during charging/discharging, and accumulation of lithium sulfide on the negative electrode surface, resulting in shorter life. Accordingly, an aspect of the present disclosure is aimed at solving the above-described problems.

An electrolyte for a lithium-sulfur battery of the present disclosure includes:
a lithium salt, a non-aqueous solvent and an additive,
wherein the additive includes a compound of the following Chemical Formula 1: 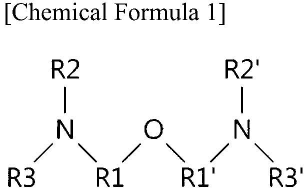
wherein R1 and R1' are each independently an alkylene group having 1 to 10 carbon atoms, and
wherein R2, R2', R3 and R3' are each independently an alkyl group having 1 to 10 carbon atoms.

In an embodiment of the present disclosure, the electrolyte for the lithium-sulfur battery may include an electrolyte solution, but is not limited thereto.

### Additive

In the present disclosure, the additive includes the compound of the following Chemical Formula 1: 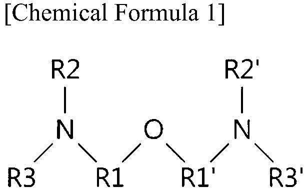
wherein R1 and R1' are each independently an alkylene group having 1 to 10 carbon atoms, and
wherein R2, R2', R3 and R3' are each independently alkyl group having 1 to 10 carbon atoms.

The compound of Chemical Formula 1 may be a compound that can coordinate with lithium ions, and when the compound is added as the additive of the electrolyte, it may repel polysulfide from lithium ions, thereby preventing polysulfide-induced degradation of the negative electrode of the lithium-sulfur battery.

There have been attempts to add a non-solvent or an additive that does not coordinate with lithium ions but can form a stable SEI layer on the surface of the lithium negative electrode, but because the non-solvent or additive does not have the ability to dissolve the active material, it results in overvoltage of the battery, causing capacity decline or reaction with the active material.

Accordingly, the present disclosure adds a compound that can coordinate with lithium ions, to prevent the active material, polysulfide from coordinating with lithium ions, thereby suppressing decomposition of polysulfide and forming a stable interface on the negative electrode surface, leading to improved life performance.

To work by the above-described mechanism, the inventors found that the compound having the structure of Chemical Formula 1 including a large number of atoms having high electron density such as oxygen and nitrogen is advantageous in coordinating with lithium ions. In addition, the inventors found that the superior effect is found in lithium-sulfur batteries rather than lithium ion batteries, and added the compound of Chemical Formula 1 as the additive of the electrolyte for the lithium-sulfur battery.

In the compound of Chemical Formula 1, R1 and R1' may be each independently an alkylene group having 1 to 10 carbon atoms, 1 to 5 carbon atoms or 1 to 3 carbon atoms, and R2, R2', R3 and R3' may be each independently an alkyl group having 1 to 10 carbon atoms, 1 to 5 carbon atoms or 1 to 3 carbon atoms. For example, the compound of Chemical Formula 1 may include bis[2-(N,N-dimethylamino)ethyl] ether (BDMA).

Here, R2, R2', R3, and R3' do not need to be different from one another. For example, R2 may be the same as R3, and R2' may be the same as R3'. In this case, the compound of Chemical Formula 1 may be represented by Chemical Formula 2 below:

[Chemical Formula 2] N(R2)₂- R1 - O - R1' - N(R2')₂

Because the additive of the present disclosure does not participate in electrochemical reaction of the battery and plays a role in improving the efficiency of the negative electrode and the performance of the battery, any other material than the compound of Chemical Formula 1 may be included as the additive.

In an embodiment of the present disclosure, the additive may further include a nitric acid compound.

In addition to the lithium salt, the nitric acid compound may dissolve in the electrolyte of the lithium secondary battery to provide ions, in order to improve the electrical conductivity of the lithium-sulfur battery and suppress the reduction reaction of polysulfide during charging/discharging of the lithium-sulfur battery, thereby preventing irreversible consumption of polysulfide, and improving the performance of the lithium-sulfur battery.

The nitric acid compound is not limited to a particular type and may include those having effects of forming a stable film on the negative electrode of the lithium-sulfur battery and improving charge/discharge efficiency.

For example, the nitric acid compound may be selected from the group consisting of an inorganic nitrate or nitrite compound such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂) or ammonium nitrite (NH₄NO₂); an organic nitrate or nitrite compound such as methyl nitrate, dialkyl imidazolium nitrate, guanidine nitrate, imidazolium nitrate, pyridinium nitrate, ethyl nitrite, propyl nitrite, butyl nitrite, pentyl nitrite or octyl nitrite; and an organic nitro compound such as nitromethane, nitropropane, nitrobutane, nitrobenzene, dinitrobenzene, nitropyridine, dinitropyridine, nitrotoluene or dinitrotoluene, and a combination thereof, and preferably, may include lithium nitrate.

In an embodiment of the present disclosure, the additive may be included in an amount of from 1 wt% to 10 wt%, from 2 wt% to 9 wt%, or from 3 wt% to 8 wt% based on the total 100 wt% of the electrolyte for the lithium-sulfur battery, but is not limited thereto. When the additive is included in the aforementioned amount, this has a beneficial effect on preventing the decrease in ionic conductivity and suppressing the reduction of the active material, polysulfide, on the negative electrode surface when used in the lithium-sulfur battery.

In addition, in an embodiment of the present disclosure, the compound of Chemical Formula 1 may be included in an amount of from 0.5 wt% to 5 wt%, from 1 wt% to 5 wt%, or from 2 wt% to 4 wt% based on the total 100 wt% of the electrolyte for the lithium-sulfur battery, but is not limited thereto. When the compound of Chemical Formula 1 is included in the aforementioned amount, ionic conductivity does not decrease and solubility of polysulfide is not significantly reduced, thereby preventing capacity decline.

### Lithium salt

The lithium salt is not limited to a particular type and may include any lithium salt used in the electrolyte of the lithium-sulfur battery.

For example, the lithium salt may include LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylic acid, lithium tetraphenylborate, lithium imide or two or more of them.

In an embodiment of the present disclosure, the concentration of the lithium salt may be properly determined, taking ionic conductivity or solubility into account, and for example, the concentration of the lithium salt in the electrolyte for the lithium-sulfur battery may range from 0.1M to 4M, preferably from 0.5M to 2M. When the concentration of the lithium salt lies in the aforementioned range, this may have a beneficial effect on ensuring the suitable ionic conductivity for the operation of the battery, or achieving the proper viscosity of the electrolyte, thereby improving mobility of lithium ions and suppressing the decomposition reaction of the lithium salt itself, but the present disclosure is not limited thereto.

### Non-aqueous solvent

The non-aqueous solvent is not limited to a particular type and may include any non-aqueous solvent used in the electrolyte of the lithium-sulfur battery, and is used to dissolve the lithium salt and/or the additive.

For example, the non-aqueous solvent may include an ether-based solvent.

The ether-based solvent may include, for example, a linear ether, a cyclic ether or a mixture thereof, according to the structure of the compound. In an embodiment of the present disclosure, the linear ether may include, for example, at least one selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tert-butyl ethyl ether and ethylene glycol ethyl methyl ether. Preferably, the linear ether may include at least one selected from the group consisting of dimethyl ether, dimethoxyethane, diethoxyethane, diethylene glycol dimethyl ether, triethylene glycol dimethyl ether and tetraethylene glycol dimethyl ether, and more preferably, dimethoxyethane.

In an embodiment of the present disclosure, the cyclic ether may include, for example, at least one selected from the group consisting of 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene and isosorbide dimethyl ether. Preferably, the cyclic ether may include at least one selected from the group consisting of 2-methylfuran, 1,3-dioxolane, tetrahydrofuran, 2-methyltetrahydrofuran and 2,5-dimethyltetrahydrofuran, and more preferably, 2-methylfuran.

In an embodiment of the present disclosure, the non-aqueous solvent may include dimethoxyethane and 2-methylfuran.

In an embodiment of the present disclosure, the non-aqueous solvent may include the ether-based solvent more than half of the total volume of the non-aqueous solvent. Specifically, the volume of the ether-based solvent may be 50 vol% or more, specifically 60 vol% or more, and more specifically from 70 vol% to 100 vol%, or from 80 vol% to 100 vol%, based on the total volume of the non-aqueous solvent.

In another embodiment of the present disclosure, the non-aqueous solvent may include the cyclic ether and the linear ether. For example, the non-aqueous solvent may include a mixture of 2- methylfuran (2-MeF) as the cyclic ether and dimethoxy ethane (DME) as the linear ether.

According to an embodiment of the present disclosure, when the non-aqueous solvent includes the cyclic ether and the linear ether, the cyclic ether and the linear ether may be, for example, included at a volume ratio of from 5:1 to 1:5 or from 4:1 to 1:4, but the present disclosure is not limited thereto.

As described above, using the composition of the electrolyte for the lithium-sulfur battery according to an aspect of the present disclosure, it may be possible to achieve the effects of suppressing the elution of lithium polysulfide and preventing the passivation caused by the accumulation of lithium sulfide on the negative electrode, thereby improving the operational stability of the lithium-sulfur battery, but the present disclosure is not limited thereto.

In addition to the ether-based solvent, the non-aqueous solvent may further include an ester-based solvent, a carbonate-based solvent, or two or more of them.

In an embodiment of the present disclosure, the ester-based solvent may include, for example, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone and ε-caprolactone, or a mixture thereof, but is not limited thereto.

In an embodiment of the present disclosure, the carbonate-based solvent may include, for example, dimethyl carbonate, diethyl carbonate, dipropyl carbonate, ethyl methyl carbonate, methylpropyl carbonate, ethylpropyl carbonate, ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and their halogenates, or a mixture thereof. The halogenate may include, for example, fluoroethylene carbonate, but is not limited thereto.

In another embodiment of the present disclosure, because the carbonate-based solvent does not dissolve the nitric acid compound or dissolves the nitric acid compound with low solubility, the non-aqueous solvent may not substantially include the carbonate-based solvent.

### Lithium-sulfur battery

In addition, according to another aspect of the present disclosure, there is provided a lithium-sulfur battery including the above-described electrolyte for the lithium-sulfur battery.

The lithium-sulfur battery relates to a lithium secondary battery including a positive electrode; a negative electrode; a separator interposed between the positive electrode and the negative electrode; and an electrolyte, wherein the electrolyte is the same as the above-described electrolyte of the present disclosure.

### Positive electrode

The positive electrode may include a positive electrode current collector and a positive electrode active material layer on one or two surfaces of the positive electrode current collector.

The positive electrode current collector is not limited to a particular type and may include those that support a positive electrode active material, and have high conductivity without causing any chemical change in the corresponding battery. For example, the positive electrode active material layer includes the positive electrode active material, and may further include a conductive material, a binder and an additive.

The positive electrode active material includes a sulfur-containing compound. Specifically, the positive electrode active material includes a sulfur-carbon composite. The sulfur-carbon composite may include a porous carbon material and sulfur in at least part of the inside of the porous carbon material and the outer surface of the porous carbon material. Because the sulfur included in the positive electrode active material does not have electrical conductivity, it is used in combination with a conductive material such as the carbon material. The sulfur may include at least one selected from the group consisting of elemental sulfur (S₈) and a sulfur compound.

The sulfur-carbon composite includes the porous carbon material to provide the skeleton for holding the sulfur uniformly and stably, and make up for low electrical conductivity of the sulfur to enhance electrochemical reaction.

The porous carbon material may be generally manufactured by carbonizing precursors of various carbon materials. The porous carbon material may include irregular pores therein, and have an average pore diameter ranging from 1 nm to 200 nm and a porosity ranging from 10% to 90% of the total volume of the porous carbon material. When the average pore diameter is below the aforementioned range, the pore size is only at the molecular level, making it impossible to load the sulfur, and on the contrary, when the average pore diameter is above the aforementioned range, it is not desirable for application to the electrode manufacturing process due to low mechanical strength of the porous carbon material.

In an embodiment of the present disclosure, the 'average pore diameter' may be measured by a known method for measuring the pore diameter of a porous material, and the measurement method is not limited to a particular one. For example, the pore diameter may be measured by scanning electron microscopy (SEM), field emission microscopy or laser diffraction. The measurement using the laser diffraction may use, for example, a commercially available laser diffraction particle size measurement device (for example, Microtrac MT 3000).

In an embodiment of the present disclosure, the 'porosity' refers to the ratio of pore volume in a structure to its total volume and is indicated in %, and may be used interchangeably with void fraction, degree of porosity or the like. In the present disclosure, the measurement of the porosity is not limited to a particular method, and according to an embodiment of the present disclosure, for example, the porosity may be measured by the Brunauer-Emmett-Teller (BET) method using nitrogen gas, Hg porosimeter or ASTM D2873.

The porous carbon material may be spherical, rod-like, needle-like, platy, tubular or bulky in shape, and is not limited to a particular shape and may have any shape commonly used in the lithium-sulfur battery.

The porous carbon material may include any commonly used type of material having a porous structure or high specific surface area. For example, the porous carbon material may include at least one selected from the group consisting of graphite; graphene; carbon black such as Denka black, acetylene black, Ketjen black, channel black, furnace black, lamp black, and thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); graphite such as natural graphite, artificial graphite or expandable graphite and activated carbon, but is not limited thereto. Preferably, the porous carbon material may include carbon nanotubes.

In the sulfur-carbon composite according to the present disclosure, the sulfur may be located at either the inside of the porous carbon material or the outer surface of the porous carbon material or both, and for example, may be present in an area of less than 100%, preferably 1% to 95%, and more preferably 40% to 96% of the sum of the inside of the porous carbon material and the outer surface of the porous carbon material. When the sulfur is present in the inside of the porous carbon material and on the outer surface of the porous carbon material within the aforementioned range, the maximum effect may be provided in terms of electron transport area and electrolyte wettability. Specifically, when the sulfur may be loaded onto the inside of the porous carbon material and the outer surface of the porous carbon material at the aforementioned range of areas in a thin and even manner, it may be possible to increase the electron transport contact area during charging/discharge. When the sulfur is located in the 100% area of the inside of the porous carbon material and the outer surface of the porous carbon material, the porous carbon material may be completely covered with the sulfur, and have poor wetting and contact with the electrolyte, thereby failing to gain electrons and participate in electrochemical reaction.

The sulfur-carbon composite may, for example, include the sulfur in an amount of 65 wt% or more, specifically from 65 wt% to 90 wt%, from 70 wt% to 85 wt%, or from 72 wt% to 80 wt%, based on 100 wt% of the sulfur-carbon composite. When the amount of the sulfur lies in the aforementioned range, this may have a beneficial effect on improving the performance of the battery and increasing the capacity of the battery, but the present disclosure is not limited thereto.

The method for producing the sulfur-carbon composite of the present disclosure is not limited to a particular one in the present disclosure, and may include any method commonly used in the art. For example, one of the methods may include simply mixing the sulfur with the porous carbon material and performing thermal treatment to form a composite.

In addition to the above-described composition, the positive electrode active material may further include at least one selected from transition metal elements, Group IIIA elements, Group IVA elements, sulfur compounds of these elements, and alloys of these elements and sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In or Ti, and the Group IVA elements may include Ge, Sn or Pb.

In the positive electrode of the lithium-sulfur battery of the present disclosure, the positive electrode active material may be, for example, included in an amount of 80 wt% or more, specifically from 80 wt% to 100 wt%, and more specifically from 85 wt% to 98 wt%, or from 80 wt% to 95 wt%, based on the total weight of the positive electrode active material layer. The lower limit of the amount of the positive electrode active material may be 70 wt% or more or 85 wt% or more , and the upper limit may be 99 wt% or less, or 90 wt% or less, based on the total 100 wt% of the positive electrode active material layer. The amount of the positive electrode active material may be set by a combination of the lower limit and the upper limit. When the amount of the positive electrode active material is below the aforementioned range, it may be difficult to achieve high capacity and high energy density in the battery due to the larger amount of the auxiliary material such as the conductive material and the binder and the smaller amount of the positive electrode active material, and on the contrary, when the amount of the positive electrode active material is above the aforementioned range, the physical properties of the electrode may become poor due to the relatively insufficient amount of the conductive material or the binder described below.

The conductive material is a material that electrically connects the electrolyte to the positive electrode active material and acts as a movement path of electrons from the current collector to the positive electrode active material, and may include, without limitation, any material having conductivity as the component of the electrode that is physically different from the carbon contained in the sulfur-carbon composite.

The conductive material may include, for example, carbon black such as Super-P, Denka black, acetylene black, Ketjen black, channel black, furnace black, lamp black, thermal black or carbon black; carbon derivatives such as carbon nanotubes or fullerene; conductive fibers such as carbon fibers or metal fibers; fluorocarbon; metal powder such as aluminum powder or nickel powder; or conductive polymer such as polyaniline, polythiophene, polyacetylene or polypyrrole, used singly or in combination.

The conductive material may be included in an amount of from 1 wt% to 10 wt% based on the total weight of the positive electrode active material. When the amount of the conductive material is below the aforementioned range, voltage and capacity may decrease due to poor electron transport between the positive electrode active material and the current collector. On the contrary, when the amount of the conductive material is above the aforementioned range, the total energy (amount of electric charge) of the battery may decrease due to the smaller ratio of the positive electrode active material, and accordingly it is preferable to determine the optimal amount within the aforementioned range.

The binder is used to hold the positive electrode active material onto the positive electrode current collector and bind the positive electrode active material to increase the bond strength, and may include any binder well-known in the art.

For example, the binder may include one selected from the group consisting of a fluororesin-based binder including polyvinylidene fluoride (PVdF), polyvinylidene fluoride-based polymer including at least one vinylidene fluoride as a repeating unit, polytetrafluoroethylene (PTFE) or a mixture thereof; a rubber-based binder including styrene butadiene rubber (SBR), acrylonitrile-butadiene rubber or styrene-isoprene rubber; an acrylic binder; a cellulose-based binder including carboxyl methyl cellulose (CMC), starch, hydroxy propyl cellulose or regenerated cellulose; a polyalcohol-based binder; a polyolefin-based binder including polyethylene or polypropylene; a polyimide-based binder; a polyester-based binder; and a silane-based binder; or a mixture or copolymer thereof.

The binder may be included in an amount of from 1 wt% to 10 wt% based on the total weight of the positive electrode active material layer. When the amount of the binder is below the aforementioned range, the positive electrode active material and the conductive material may be separated due to the poor physical properties of the positive electrode, and when the amount of the binder is above the aforementioned range, the battery capacity may decrease due to the smaller ratio of the positive electrode active material and the conductive material in the positive electrode, and accordingly, it is preferable to determine the optimal amount within the aforementioned range.

In the present disclosure, the method for manufacturing the positive electrode of the lithium-sulfur battery is not limited to a particular one, and may include any method known to those skilled in the art or variations thereof.

For example, the positive electrode of the lithium-sulfur battery may be manufactured by preparing a positive electrode slurry composition including the above-described composition and coating the positive electrode slurry composition on at least one surface of the positive electrode current collector to form the positive electrode active material layer.

The positive electrode slurry composition includes the above-described positive electrode active material, and may further include the binder, the conductive material and a solvent.

The solvent may include any solvent that evenly disperses the positive electrode active material. The solvent may include an aqueous solvent, and most preferably water, and in this instance, water may include distilled water or deionized water. However, the solvent is not limited thereto, and if necessary, may include lower alcohol that easily mixes with water. The lower alcohol may include methanol, ethanol, propanol, isopropanol and butanol, and preferably, these lower alcohols may be mixed with water.

The amount of the solvent may be at such a level of concentration at which the coating is made easy, and the specific amount may change depending on the coating method and device.

The positive electrode slurry composition may further include, if necessary, any material commonly used in the corresponding technical field for the purpose of improving the function, for example, a viscosity modifier, a fluidizing agent or fillers.

The coating method of the positive electrode slurry composition is not limited to a particular one in the present disclosure, and may include, for example, doctor blading, die casting, comma coating or screen printing. In addition, the positive electrode slurry may be coated on the positive electrode current collector by forming on a separate substrate and then pressing or lamination.

After the coating, a drying process may be performed to remove the solvent. The drying process may be performed at a level of temperature and time sufficient for removing the solvent, and the conditions may change depending on the type of solvent and are not particularly limited in the present disclosure. For example, the drying method may include drying by warm air, hot air or low-humidity air, vacuum drying, or drying by (far)infrared radiation and electron beam radiation. The drying speed is usually adjusted so as to remove the solvent as quickly as possible within a speed range for preventing cracks in the positive electrode active material layer due to stress concentration or preventing the positive electrode active material layer from peeling off the positive electrode current collector.

Additionally, after the drying, the current collector may be pressed to increase the density of the positive electrode active material in the positive electrode. The pressing method may include mold pressing and roll pressing.

The positive electrode manufactured by the above-described composition and manufacturing method, specifically the positive electrode active material layer may have a porosity of from 50% to 80%, and specifically from 60% to 75%. When the porosity of the positive electrode is less than 50%, it fails to maintain a sufficient amount of electrolyte for ensuring ionic conductivity and/or electrical conductivity among the positive electrode active material due to the very high level of filling of the positive electrode slurry composition including the positive electrode active material, the conductive material and the binder, resulting in poor output characteristics or cycling characteristics of the battery, which may aggravate the overvoltage and decrease in discharge capacity of the battery. On the contrary, when the positive electrode has very high porosity that is over 80%, physical and electrical connection with the current collector may decline and adhesion strength may decrease, leading to poor reaction, and higher porosity may increase the electrolyte filling and decrease the energy density of the battery, and accordingly the porosity is properly adjusted within the aforementioned range.

### Negative electrode

The negative electrode may include a negative electrode current collector and a negative electrode active material layer on one or two surfaces of the negative electrode current collector. Alternatively, the negative electrode may be a lithium metal plate.

The negative electrode current collector is used to support the negative electrode active material layer as described in the positive electrode current collector.

The negative electrode active material layer may include a negative electrode active material as well as a conductive material and a binder. In this instance, the conductive material and the binder follow the foregoing description.

The negative electrode active material may include a material that reversibly intercalates or deintercalates lithium (Li⁺), a material that reversibly forms a lithium-containing compound by reaction with lithium ions, a lithium metal, a lithium alloy, or a mixture thereof.

The material that reversibly intercalates or deintercalates lithium ions (Li⁺) may include, for example, a crystalline carbon, an amorphous carbon or a mixture thereof. The material that reversibly forms a lithium-containing compound by reaction with lithium ions (Li⁺) may include, for example, tin oxide, titanium nitrate or silicon. The lithium alloy may include, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may include a lithium metal, and specifically, may be in the form of a lithium metal thin film or a lithium metal powder.

### Separator

The separator separates or insulates the positive electrode from the negative electrode and allows lithium ion transport between the positive electrode and the negative electrode, and may include a porous non-conductive or insulating material, and is not limited to a particular type and may include any separator commonly used in the lithium secondary battery. The separator may include a free-standing film or a coating layer added to the positive electrode and/or the negative electrode.

The separator may preferably have low resistance to electrolyte ion movement and high electrolyte wetting capacity.

The separator may include a porous substrate, and the porous substrate may include any porous substrate commonly used in the secondary battery, and may include a porous polymer film used singly or in stack, for example, a nonwoven fabric made of high-melting-point glass fibers, polyethylene terephthalate fibers, or a polyolefin-based porous membrane, but is not limited thereto.

The porous substrate is not limited to a particular material in the present disclosure, and may include any porous substrate commonly used in the electrochemical device. For example, the porous substrate may include at least one material selected from the group consisting of polyolefin such as polyethylene or polypropylene, polyester such as polyethyleneterephthalate or polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene)benzobisoxazole and polyarylate.

The thickness of the porous substrate is not limited to a particular range, but may range from 1 µm to 100 µm, and preferably from 5 µm to 50 µm. The thickness range of the porous substrate is not limited to the aforementioned range, but when the thickness is overly smaller than the aforementioned lower limit, the separator may be easily damaged while the battery is in use due to the poor mechanical properties.

The average pore diameter and porosity of the porous substrate are not limited to particular ranges but may range from 0.001 µm to 50 µm and from 10% to 95%, respectively.

The lithium-sulfur battery according to the present disclosure may be manufactured by a commonly used process, winding, as well as laminating (stacking) and folding of the separator and the electrode.

The lithium-sulfur battery is not limited to a particular shape, and may have various shapes such as cylindrical, stack-type, coin-type or pouch-type.

Hereinafter, examples are presented to help the understanding of the present disclosure, but the following examples are provided to describe the present disclosure by way of illustration, and it is obvious to those skilled in the art that a variety of changes and modifications may be made thereto within the scope and technical aspects of the present disclosure, and it should be understood that such changes and modifications fall within the scope of the appended claims.

### <Preparation of electrolyte for lithium-sulfur battery>

### Example 1 and Comparative Examples 1 to 3

An electrolyte for a lithium-sulfur battery was prepared with the composition shown in TABLE 1 below.

**[TABLE 1]**

| | Lithium salt | | Non-aqueous solvent | Additive | | Nitric acid compound |
|---|---|---|---|---|---|---|
| | Type | Concentration | | Type | Concentration | |
| Example 1 | LiFSI | 0.5M | DME:2-MeF (8:2 (v/v)) | BDMA | 3 wt% | LiNO₃ (5 wt%) |
| Comparative Example 1 | LiFSI | 0.5M | | - | | |
| Comparative Example 2 | LiFSI | 0.5M | | N-methylpyrrole | 3 wt% | |
| Comparative Example 3 | LiFSI | 0.5M | | tributyl amine | 3 wt% | |

The additive was included in an amount of 3 wt% based on the total weight of the electrolyte for the lithium-sulfur battery, and the nitric acid compound was included in an amount of 5 wt% based on the total weight of the electrolyte for the lithium-sulfur battery.

DME is dimethoxyethane, 2-MeF is 2-methylfuran, and BDMA is bis[2-(N,N-dimethylamino)ethyl] ether.

### Evaluation of capacity retention of lithium-sulfur battery

96 wt% of a sulfur-carbon composite (S:C = 75:25 (weight ratio)) as a positive electrode active material and 4 wt% of lithium polyacrylate (LiPAA) as a binder were mixed to prepare a positive electrode slurry composition. The positive electrode slurry composition was coated on an aluminum current collector and dried to manufacture a positive electrode. The loading of the manufactured positive electrode was 3.5 to 4.5 mAh/cm².

A 60 µm-thick lithium metal was used as a negative electrode.

The positive electrode and the negative electrode were placed with a polyethylene separator having a thickness of 12 µm and a porosity of about 40% interposed between, and each of the electrolytes prepared in Example 1 and Comparative Examples 1 to 3 was injected to manufacture a pouch cell-type lithium-sulfur battery such that a weight ratio of electrolyte:sulfur is 3:1.

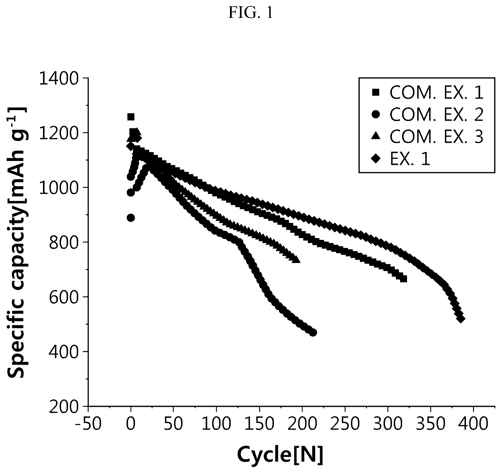

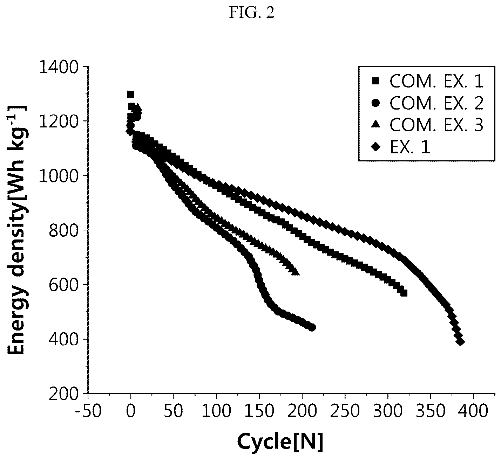

The lithium-sulfur battery manufactured as described above was charged at 0.5C in a CC mode up to 2.5V at 25°C and discharged with 1C constant current up to 1.8V, and capacity retention comparison was carried out in 300 charge and discharge cycles, and the results are shown in TABLE 2 and FIGS. 1 and 2.

**[TABLE 2]**

| | Capacity retention (%)(@300 cycles) |
|---|---|
| Example 1 | 68.4 |
| Comparative Example 1 | 55.7 |
| Comparative Example 2 | - |
| Comparative Example 3 | - |

From the results of TABLE 2 and FIGS. 1 and 2, it was confirmed that Example 1 including BDMA as the additive had higher capacity retention than Comparative Example 1 without BDMA.

However, Comparative Examples 2 and 3 without the compound of Chemical Formula 1 according to the present disclosure as the additive could not maintain the capacity over 300 cycles, and it was impossible to determine the capacity retention in 300 cycles.

From these results, it was confirmed that the electrolyte for the lithium-sulfur battery of the present disclosure may improve the capacity retention of the lithium-sulfur battery, thereby increasing the life.

## Claims

1. An electrolyte for a lithium-sulfur battery comprising:
a lithium salt, a non-aqueous solvent and an additive,
wherein the additive includes a compound of the following Chemical Formula 1: 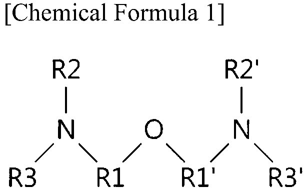
wherein R1 and R1' are each independently an alkylene group having 1 to 10 carbon atoms, and
wherein R2, R2', R3 and R3' are each independently an alkyl group having 1 to 10 carbon atoms.

2. The electrolyte for the lithium-sulfur battery according to claim 1,
wherein R1 and R1' are each independently an alkylene group having 1 to 3 carbon atoms, and
wherein R2, R2', R3 and R3' are each independently an alkyl group having 1 to 3 carbon atoms.

3. The electrolyte for the lithium-sulfur battery according to claim 1,
wherein the compound of Chemical Formula 1 includes bis[2-(N,N-dimethylamino)ethyl] ether (BDMA).

4. The electrolyte for the lithium-sulfur battery according to claim 1,
wherein the additive further includes a nitric acid compound.

5. The electrolyte for the lithium-sulfur battery according to claim 4,
wherein the nitric acid compound includes lithium nitrate (LiNO₃).

6. The electrolyte for the lithium-sulfur battery according to claim 1,
wherein the additive is included in an amount of 1 wt% to 10 wt% based on total 100 wt% of the electrolyte.

7. The electrolyte for the lithium-sulfur battery according to claim 1,
wherein the compound of the Chemical Formula 1 is included in an amount of 0.5 wt% to 5 wt% based on total 100 wt% of the electrolyte.

8. The electrolyte for the lithium-sulfur battery according to claim 1,
wherein the non-aqueous solvent includes an ether-based solvent.

9. The electrolyte for the lithium-sulfur battery according to claim 8,
wherein the ether-based solvent is included in an amount of 80 vol% or more based on a total volume of the non-aqueous solvent.

10. The electrolyte for the lithium-sulfur battery according to claim 1,
wherein the lithium salt includes LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborane, lithium lower aliphatic carboxylic acid, lithium tetraphenylborate, lithium imide or two or more of them.

11. A lithium-sulfur battery comprising:
a positive electrode; a negative electrode; a separator between the positive electrode and the negative electrode; and an electrolyte,
wherein the electrolyte is defined in any one of claims 1 to 10.

12. The lithium-sulfur battery according to claim 11,
wherein the positive electrode includes a sulfur-containing compound as a positive electrode active material.

13. The lithium-sulfur battery according to claim 11,
wherein the negative electrode includes a lithium metal, a lithium alloy or a mixture thereof.
